# EUROPEAN PATENT APPLICATION

(11) **EP 1 767 558 A1**
(43) Date of publication of application: **28.03.2007**
(21) Application number: 06019170.7
(22) Date of filing: 13.09.2006
(51) Int. Cl.: C08G 18/10, C08G 18/67

(54) **Radiation-curable polyurethane resin compositions with controlled structures**

(30) Priority: 16.09.2005 US 228169
(71) Applicant: Air Products and Chemicals, Inc., Allentown, PA 18195-1501 (US)
(72) Inventor: Goddard, Richard Joseph, Fogelsville, PA 18051 (US)
(74) Representative: Kador & Partner

(57) **Abstract**

The present invention provides radiation-curable polyurethane resin compositions exhibiting reduced viscosity and processes to produce such compositions. The radiation-curable polyurethane resin composition comprises the contact product of
(a) at least one active hydrogen-containing compound having X active hydrogen atoms,
(b) at least one polyisocyanate having F isocyanate functionalities; and
(c) at least one radiation-curable small molecule having one active hydrogen atom;
wherein F and X are each a number ≥2; and
wherein at least about 80% of the composition comprises an adduct of X moles of polyisocyanate and (F-1)X moles of radiation-curable small molecule per mole of active hydrogen-containing compound.

## Description

### BACKGROUND OF THE INVENTION

The present invention relates to radiation-curable polyurethane resin compositions and processes for the production thereof.

Radiation-curable polyurethanes are useful in a growing number of applications, such as coatings, inks, and adhesives. Conventional radiation-curable polyurethanes are generally formed from radiation-curable oligomers. These oligomers have a relatively high molecular weight, which raises the viscosity of the composition to a level that is unacceptable for most applications. Thus, a low molecular weight diluent is generally added to reduce the viscosity to acceptable processing levels. However, reactive diluents have several drawbacks, including increased processing costs, alteration of the physical properties of the polyurethane, toxicity, and emission of volatile components during processing. Various methods have been employed in the prior art to reduce the viscosity of radiation-curable polyurethane resins, for example, the methods described in U.S. 3,700,643; 4,072,770; 4,188,455; 5,093,386; 5,135,963; 5,624,759; 5,674,921; 6,023,547; and 6,852,770, incorporated herein by reference in their entireties. However, none of the prior art methods discuss reducing the viscosity of a radiation-curable polyurethane resin by controlling its structure in the manner set forth in the present invention. It is therefore desirable to produce new radiation-curable polyurethane resin compositions that have decreased viscosity, and thus, require reduced levels of reactive diluents.

### BRIEF SUMMARY OF THE INVENTION

The present invention relates to novel radiation-curable polyurethane resin compositions exhibiting reduced viscosities and processes to produce such compositions. The radiation-curable polyurethane resin composition comprises the contact, or reaction, product of
(a) at least one active hydrogen-containing compound having X active hydrogen atoms,
(b) at least one polyisocyanate having F isocyanate (NCO) functionalities and
(c) at least one radiation-curable small molecule having one active hydrogen atom;
wherein F and X are independently numbers ≥2; and
wherein at least about 80 wt% of the resin composition comprises an adduct of X moles of polyisocyanate and (F-1)X moles of radiation-curable small molecule per mole of active hydrogen-containing compound. In another aspect, at least about 90 wt% of the resin composition comprises an adduct of X moles of polyisocyanate and (F-1)X moles of radiation-curable small molecule per mole of active hydrogen-containing compound.

The present invention also relates to a process to produce a radiation-curable polyurethane resin composition comprising
(a) forming a prepolymer composition by contacting at least one polyisocyanate having F isocyanate (NCO) functionalities and at least one active hydrogen-containing compound having X active hydrogen atoms; wherein F and X are independently numbers ≥2; the prepolymer composition
   (1) containing less than about 1 wt% unreacted polyisocyanate; and
   (2) comprising at least about 80 wt% of a prepolymer of X moles of polyisocyanate per mole of active hydrogen-containing compound; and
(b) contacting the prepolymer composition with a sufficient amount of at least one radiation-curable small molecule having one active hydrogen atom to afford an adduct of X moles of polyisocyanate and (F-1)X moles of radiation-curable small molecule per mole of active hydrogen-containing compound. Such sufficient amount of radiation-curable small molecule would provide about one equivalent of radiation-curable small molecule per equivalent of unreacted NCO in the prepolymer, i.e., an active hydrogen to NCO equivalent ratio of at least about 1:1.

The present invention also relates to a process to produce a radiation-curable polyurethane resin composition comprising
(a) forming a prepolymer composition by contacting at least one polyisocyanate having F NCO functionalities and at least one active hydrogen-containing compound having X active hydrogen atoms in an NCO to active hydrogen equivalent ratio of at least about 4:1;
   wherein F and X are independently numbers ≥2; and
(b) removing unreacted polyisocyanate from the prepolymer composition such that the prepolymer composition
   (1) contains less than about 1 wt% unreacted polyisocyanate; and
   (2) comprises at least about 80 wt% of a prepolymer of X moles of polyisocyanate per mole of active hydrogen-containing compound; and
(c) contacting the prepolymer composition with at least one radiation-curable small molecule having one active hydrogen atom in an amount sufficient to afford an adduct of X moles of polyisocyanate and (F-1)X moles of radiation-curable small molecule per mole of active hydrogen-containing compound. Such sufficient amount of radiation-curable small molecule would provide at least about one equivalent of radiation-curable small molecule per equivalent of unreacted NCO in the prepolymer, i.e., an active hydrogen to NCO equivalent ratio of at least about 1:1.

Yet a further aspect of the present invention encompasses a process to produce a radiation-curable polyurethane resin composition comprising
(a) forming a prepolymer composition by contacting a di-isocyanate and at least one radiation-curable small molecule having one active hydrogen atom; the prepolymer composition
   (1) containing less than about 1 wt% unreacted di-isocyanate; and
   (2) comprising at least about 80 wt% of a prepolymer of one mole of di-isocyanate per mole of radiation-curable small molecule; and
(b) contacting the prepolymer composition with at least one active hydrogen-containing compound having X active hydrogen atoms, wherein X is a number ≥2, in an NCO to active hydrogen equivalent ratio of approximately 1:1 to afford an adduct of X moles of di-isocyanate and X moles of radiation-curable small molecule per mole of active hydrogen-containing compound.

A still further aspect of the present invention encompasses a process to produce a radiation-curable polyurethane resin composition using a di-isocyanate comprising
(a) forming a prepolymer composition by contacting at least one di-isocyanate and at least one radiation-curable small molecule having one active hydrogen atom in an NCO to active hydrogen equivalent ratio of at least about 4:1;
(b) removing unreacted di-isocyanate from the prepolymer composition such that;
   (1) the amount of unreacted di-isocyanate in the prepolymer composition is less than about 1 wt% based on the total weight of the prepolymer; and
   (2) at least about 80 wt% of the prepolymer composition comprises a prepolymer of one mole of di-isocyanate per mole of radiation-curable small molecule; and
(c) contacting the prepolymer composition with at least one active hydrogen-containing compound having X active hydrogen atoms, wherein X is a number ≥2, in an NCO to active hydrogen equivalent ratio of approximately 1:1 to afford an adduct of X moles of di-isocyanate and X moles of radiation-curable small molecule per mole of active hydrogen-containing compound.

### DETAILED DESCRIPTION OF THE INVENTION

The present invention provides novel radiation-curable polyurethane resin compositions exhibiting reduced viscosities and processes to produce such compositions. One aspect of the present invention encompasses polyurethane resin compositions with controlled structure formed by contacting (a) at least one active hydrogen-containing compound having at least two active hydrogen atoms, (b) at least one polyisocyanate, and (c) at least one radiation-curable small molecule having one active hydrogen atom. Another aspect of this invention is directed to a method for producing radiation-curable polyurethane resin compositions with controlled structure by contacting (a) at least one active hydrogen-containing compound having at least two active hydrogen atoms, (b) at least one polyisocyanate, and (c) at least one radiation-curable small molecule having one active hydrogen atom.

### Radiation-Curable Polyurethane Resin Components

### The Active Hydrogen-Containing Compound

Active hydrogen-containing compounds useful in the present invention may include any suitable compound having at least 2 active hydrogen atoms, as determined by the Zerewittenoff test. Suitable compounds have 2-4, especially 2-3, active hydrogen atoms. The active hydrogen-containing compound may contain, for example, -OH; -NH; and/or -SH functionality. Non-limiting examples of suitable active hydrogen-containing compounds include polyols, thiols, amines, amides, ureas, or any combination thereof. Preferred are the polyols.

Polyols suitable for use in the present invention include, but are not limited to, polyether polyols and polyester polyols. Polyether polyols include hydroxyl-terminated polyethers such as poly(alkylene ether) glycols, for example, poly(ethylene ether) glycol, poly(propylene ether) glycol, and poly(tetramethylene ether) glycol, and copolymers thereof. Polyether polyols also include poly(alkylene oxide) polymers such as poly(ethylene oxide), poly(propylene oxide) polymers, trimethyl ethylene oxide polymers, and copolymers with terminal hydroxyl groups derived from polyhydric compounds, including diols and triols, for example, ethylene glycol, propylene glycol, 1,3-butane diol, 1,4-butane diol, 1,6-hexane diol, neopentyl glycol, diethylene glycol, dipropylene glycol, pentaerythritol, glycerol, diglycerol, trimethylol propane, and similar low molecular weight polyols.

In one aspect of the present invention, a single high molecular weight polyether polyol may be used. Alternatively, a mixture of high molecular weight polyether polyols, for example, mixtures of di- and tri-functional materials and/or different molecular weight or different chemical composition materials may be used. Such di- and tri-functional materials include, but are not limited to ethylene glycol, poly(ethylene ether) glycol, propylene glycol, poly(propylene ether) glycol, poly(tetramethylene ether) glycol, glycerol, glycerol-based polyether triols, trimethylol propane, trimethylol propane-based polyether triols, 1,3-butane diol, 1,4-butane diol, 1,6-hexane diol, neopentyl glycol, polyether quadrols, or any combination thereof.

Useful polyester polyols include, but are not limited to, those produced by reacting a dicarboxylic acid with an excess of a diol, for example, the reaction of adipic acid with ethylene glycol or butanediol, or by reacting a lactone with an excess of a diol, such as the reaction of caprolactone with propylene glycol. Suitable polyester polyols include, but are not limited to, hydroxyl terminated polyesters such as poly(ethylene adipate), poly(propylene adipate), poly(hexamethylene adipate), and copolymers prepared by copolymerizing ethylene glycol and propylene glycol with the above-identified polyesters. Such copolymers include, but are not limited to, poly(1,4-butylene-*co*-ethylene adipate) and poly(1,4-butylene-*co*-propylene adipate). Polyester polyols with an average functionality greater than 2 may also be obtained by copolymerization of dicarboxylic acids with diols and small amounts of triols or quadrols, including trimethylol propane, glycerol, and pentaerythritol.

The above polyether and polyester polyols are conventional for producing polyurethane prepolymers and can be blended such that the polyol composition (single or blend) used in making the radiation-curable polyurethane resin compositions typically has an average number average molecular weight (Mₙ) ranging from about 400 to 10,000, and typically from 750 to about 4,000.

### Polyisocyanates

Polyisocyanate compounds useful in the present invention include, but are not limited to, aliphatic, cycloaliphatic, and aromatic polyisocyanates, for example, alkyl polyisocyanates, alkylene polyisocyanates, cycloalkyl polyisocyanates, cycloalkylene polyisocyanates, aryl polyisocyanates, arylene polyisocyanates, or any combination thereof. In one aspect of the present invention, the polyisocyanate is a diisocyanate, such as 1,6-hexamethylene diisocyanate (HDI), 2,4-toluene diisocyanate (2,4-TDI), 2,6-toluene diisocyanate (2,6-TDI), 4,4'-diphenylmethane diisocyanate (MDI), m-phenylene diisocyanate, p-phenylene diisocyanate, 3,3'-dimethyldiphenylmethane-4,4'-diisocyanate, 3,3'-dimethylphenylene diisocyanate, 1,4-naphthalene diisocyanate, 1,5-naphthalene diisocyanate, 1,4-tetramethylene diisocyanate, 1,10-decamethylene diisocyanate, 1,4-cyclohexylene diisocyanate, 4,4'-methylene bis(cyclohexyl isocyanate), 1,5-tetrahydronaphthylene diisocyanate, 4,4'-diphenylene diisocyanate, 2,2,4-trimethylhexamethyl-1,6-diisocyanate, 1,3-xylylene diisocyanate, 1,4-xylylene diisocyanate, isophorone diisocyanate, 6-isopropyl-1,3-phenyl diisocyanate, 4-diphenylpropane diisocyanate, lysine diisocyanate, or any combination thereof. In another aspect of the invention, 2,4-TDI, 2,6-TDI, or any combination thereof may be used in the present invention, including commercially available mixtures comprising from about 65 to about 99 wt% 2,4-TDI. Other suitable isocyanate compounds are mixtures of diisocyanates known commercially as "crude MDI", marketed as PAPI by Dow Chemical Company, which contain about 60% of MDI along with other isomeric and analogous higher polyisocyanates.

### Radiation-Curable Small Molecules

Radiation-curable polyurethane resins are prepared by end-capping polyisocyanate prepolymer molecules with radiation-curable small molecules. Upon irradiation with a radiation source, these end-capped polyurethane resin molecules form crosslinks between molecules, yielding tough, flexible films which are abrasion resistant and may exhibit yellowing resistant properties. Examples of radiation sources include, but are not limited to, visible rays, infrared rays, ultraviolet (UV) rays, X-rays, electron beams, α-rays, β-rays, and γ-rays. In one aspect, the radiation is in the form of UV rays, visible rays, or electron beams. Suitable radiation-curable small molecules for use in the present invention include those having one active hydrogen atom according to the Zerewittenoff test. Non-limiting examples of such radiation-curable small molecules include, but are not limited to, 2-hydroxyethyl acrylate; 2-hydroxyethyl methacrylate; 2-hydroxypropyl acrylate; 2-hydroxypropyl methacrylate; 2-hydroxybutyl acrylate; 2-hydroxybutyl methacrylate; N-hydroxymethyl acrylamide; N-hydroxymethyl methacrylamide; 1,4-butanediol monoacrylate; 1,4-butanediol monomethacrylate; 4-hydroxycyclohexyl acrylate; 4-hydroxycyclohexyl methacrylate; 1,6-hexanediol monoacrylate; 1,6-hexanediol monomethacrylate; neopentyl glycol monoacrylate; neopentyl glycol monomethacrylate; monoacrylates and monomethacrylates of ethylene glycol, diethylene glycol, triethylene glycol, propylene glycol, dipropylene glycol, and tripropylene glycol; and any combination thereof.

### Optional Additives

Radiation-curable polyurethane resins of the present invention may contain as part of a formulated system one or more optional additives. Examples of suitable additives include, but are not limited to, pigments, fillers, flame retardants, auxiliary thermoplastic components, tackifiers, plasticizers, free radical inhibitors, photoinitiators, photostabilizers, photosensitizers, UV absorbers, silane coupling agents, leveling agents, hydrolysis stabilizers, reactive diluent or any combination thereof. Additives most likely present in a formulated system with the radiation-curable polyurethane resin are one or more of free radical inhibitor, UV absorber, photoinitiator and reactive diluent. All of these additives are materials well known to those skilled in the art of radiation-curable polymer systems.

### Preparation of Radiation-Curable Polyurethane Resins

Radiation-curable polyurethane resins of the present invention are produced from NCO-terminated prepolymers (also called polyisocyanate prepolymers). Prepolymers useful in the present invention may be produced according to the teachings of U.S. 4,786,703, 6,133,415 and 6,280,561, incorporated herein by reference in their entireties.

In one aspect of the present invention, a polyisocyanate prepolymer is prepared by (a) contacting a polyisocyanate with an active hydrogen-containing compound having at least two active hydrogen atoms as determined by the Zerewittenoff test, or (b) contacting a polyisocyanate with a radiation-curable small molecule having one active hydrogen atom as determined by the Zerewittenoff test. The polyisocyanate has an NCO (equivalent isocyanate) functionality (F) of at least two. In one aspect, the contacting step is performed using a large stoichiometric excess of polyisocyanate, for example, an amount sufficient to provide an NCO to active hydrogen equivalent ratio of at least about 4:1.

During prepolymer synthesis, it is important to maintain a large stoichiometric excess of polyisocyanate in relation to the active hydrogen-containing compound or the radiation-curable small molecule. In the prior art, the prepolymer is typically prepared using a stoichiometric amount of polyisocyanate or a slight excess of polyisocyanate. For example, in the case of the reaction of a polyisocyanate and a diol, prior art methods typically employ a ratio of polyisocyanate to diol of about 2:1, or a range of about 1.2:1 to about 3:1. However, as the amount of polyisocyanate approaches a stoichiometric level, greater quantities of higher molecular weight oligomers are formed, which yields radiation-curable polyurethane resins having increased viscosity, or in the case where the hydrogen-containing compound has more than two active hydrogen atoms a chemically crosslinked product may result. By higher molecular weight oligomer, it is meant that the prepolymer molecule contains more than one active hydrogen-containing compound (molecule).

Thus, in one aspect of the present invention, polyisocyanate should be used in an amount sufficient to produce an NCO to active hydrogen equivalent ratio of at least about 4:1. In another aspect, the NCO to active hydrogen equivalent ratio may range from about 4:1 to about 20:1, or from about 4:1 to about 10:1, or from about 6:1 to about 8:1. Such ratios may be used to produce polyisocyanate prepolymer compositions having less than about 20 wt% oligomers. In one aspect, higher molecular weight oligomers may comprise less than about 10 wt% of the prepolymer composition, or, in another aspect, less than about 5 wt%.

The excess of polyisocyanate also serves to drive the reaction of the polyisocyanate with a radiation-curable small molecule or active hydrogen-containing compound. Thus, it is not typically necessary to employ a catalyst to accelerate the reaction rate during prepolymer formation. However, in one aspect of the present invention, a catalyst which accelerates the reaction of an NCO functional group with an active hydrogen atom may be used.

Temperature can also potentially play a role in minimizing the amount of oligomer formation in the prepolymer composition. In some cases, as the temperature is increased, the ratio of polyisocyanate to active hydrogen-containing compound or radiation-curable small molecule should be increased to reduce formation of higher molecular weight oligomers. Suitable temperatures for formation of the prepolymer composition may range from about 20 to about 140 °C. In one aspect of the present invention, the temperature is maintained at about 40 to about 80 °C.

Prepolymer compositions formed in accordance with one aspect of the present invention ideally comprise at least about 80 wt% "perfect" prepolymer. In another aspect, the prepolymer compositions comprise at least about 90 wt% "perfect" prepolymer. In yet another aspect the prepolymer compositions comprise at least about 95 wt% "perfect" prepolymer. By "perfect" prepolymer it is meant that a stoichiometric prepolymer is formed by the reaction of polyisocyanate with active hydrogen-containing compound or radiation-curable small molecule. For example, when a diol is used as the active hydrogen-containing compound, the "perfect" prepolymer comprises a molecule having a 2:1 molar ratio of polyisocyanate to diol. When a triol is used as the active hydrogen-containing compound, the "perfect" prepolymer comprises a molecule having a 3:1 molar ratio of polyisocyanate to triol. In the case of radiation-curable small molecules having one active hydrogen atom per molecule, the "perfect" prepolymer comprises a molecule having a 1:1 molar ratio of polyisocyanate to radiation-curable small molecule.

After a suitable contacting time for the formation of the prepolymer, for example, from about 15 minutes to about 24 hours, any unreacted polyisocyanate should be removed from the prepolymer composition. This is desirable so as to maximize the amount of "perfect" prepolymer in the prepolymer reaction composition. In the aspect where a prepolymer is first prepared by contacting a polyisocyanate with an active hydrogen-containing compound, leaving a large amount of excess polyisocyanate in the prepolymer would lead to a significant amount of undesirable 2:1 adduct of radiation-curable small molecule:polyisocyanate when the prepolymer was contacted with a stoichiometric quantity of the radiation-curable small molecule. In the aspect where a prepolymer is first prepared by contacting a polyisocyanate with a radiation-curable small molecule, leaving a large amount of excess polyisocyanate in the prepolymer would lead to a significant amount of undesirable oligomers when the prepolymer was contacted with a stoichiometric quantify of active hydrogen-containing compound.

Any suitable means known in the art for removing excess polyisocyanate from the prepolymer composition before forming the adduct is contemplated by the present invention, for example, distillation or evaporation or solvent extraction. Examples of separation processes which facilitate the removal of unreacted polyisocyanate include, but are not limited to, thin-film distillation and wiped-film evaporation. In one aspect of the present invention, the concentration of unreacted residual polyisocyanate following separation is less than about 1 wt% based on the total weight of the prepolymer composition. In another aspect, the concentration of unreacted polyisocyanate is less than about 0.5 wt%. In a further aspect, the concentration of unreacted polyisocyanate is less than about 0.1 wt%. After removal of unreacted polyisocyanate, the amount of free isocyanate (i.e., free NCO functionality) should range from about 0.8 to about 14 wt%. In another aspect, the free NCO functionality may range from about 1.8 to about 14 wt%.

After formation of a prepolymer comprising a polyisocyanate and an active hydrogen-containing compound, a radiation-curable polyurethane resin may be formed by end-capping the prepolymer with a sufficient amount of one or more radiation-curable small molecule having one active hydrogen atom to afford an adduct of X moles of polyisocyanate and (F-1)X moles of radiation-curable small molecule per mole of active hydrogen-containing compound. Such sufficient amount of radiation-curable small molecule would provide about one equivalent of radiation-curable small molecule per equivalent of unreacted NCO in the prepolymer, i.e., an active hydrogen to NCO equivalent ratio of about 1:1.

Similarly, in another aspect of the present invention, after formation of a prepolymer comprising a polyisocyanate and a radiation-curable small molecule, radiation-curable polyurethane resins may be formed by contacting the prepolymer with one or more active hydrogen-containing compounds. In one aspect of the present invention where the polyisocyanate is a di-isocyanate, such prepolymer compositions are contacted with at least one active hydrogen-containing compound having X active hydrogen atoms, wherein X is a number ≥2, in an NCO to active hydrogen equivalent ratio of approximately 1:1 to afford an adduct of X moles of di-isocyanate and X moles of radiation-curable small molecule per mole of active hydrogen-containing compound.

When a radiation-curable polyurethane resin composition is produced in accordance with the present invention, at least about 80 wt% of the radiation-curable polyurethane resin composition comprises a "perfect" adduct of X moles of polyisocyanate having F isocyanate functionalities and (F-1)X moles of radiation-curable small molecule per mole of active hydrogen-containing compound having X active hydrogen atoms, where F and X are at least two. Preferably, F and X are independently 2 or 3, and most desirably are both 2. In another aspect of the present invention, at least about 90 wt% of the resin comprises a "perfect" adduct. In yet another aspect, at least about 95 wt% of the resin comprises a "perfect" adduct.

When contacting the polyisocyanate prepolymer with either a radiation-curable small molecule or an active hydrogen-containing compound, it may be desirable to employ a catalyst to accelerate the reaction rate. Such a catalyst may be any compound which catalyzes the reaction of an NCO functional group with an active hydrogen as are well known in the polyurethane art, for example, tin catalysts such as dibutyltin dilaurate and amine catalysts such as triethylenediamine.

Reactive diluents may be added to the radiation-curable polyurethane resins of the present invention to reduce the viscosity of the formulated system that contains the radiation-curable polyurethane resin to an acceptable or preferred viscosity for processing or application. Such reactive diluents may be incorporated in the final formulated system, or added or packaged with the radiation-curable polyurethane resin so that it may be more easily handled or transferred.

A wide variety or combination of suitable reactive diluents may be used, and the amount and type of reactive diluents affects not only the viscosity of the formulated system, but also a number of other properties including reactivity, cure shrinkage, strength, elongation, and toughness.

Reactive diluents include polymerizable monofunctional vinyl monomers containing one polymerizable vinyl group in the molecule and polymerizable polyfunctional vinyl monomers containing two or more polymerizable vinyl groups in the molecule.

Suitable polymerizable monofunctional vinyl monomers include acrylates, methacrylates, and vinyl ether. Examples are hexylacrylate, 2- ethylhexylacrylate, isobornylacrylate, decylacrylate, laurylacrylate, stearylacrylate, ethoxyethoxy-ethylacrylate, laurylvinylether, 2- ethylhexylvinyl ether, N-vinyl formamide, isodecyl acrylate, isooctyl acrylate, vinyl-caprolactam, N-vinylpyrrolidone, and the like, and mixtures thereof.

Examples of suitable reactive diluents also include polymerizable polyfunctional vinyl monomers such as 1,6-hexanedioldiacrylate, trimethylolpropanetriacrylate, hexanedioldivinylether, triethyleneglycoldiacrylate, pentaerythritoltetraacrylate, tripropyleneglycol diacrylate, alkoxylated bisphenol A diacrylate, alkoxylated bisphenol A dimethacrylate, alkoxylated hydrogenated bisphenol A diacrylate, alkoxylated hydrogenated bisphenol A dimethacrylate, and the like, and mixtures thereof.

### COMPARATIVE EXAMPLE 1

### Synthesis of a polyisocyanate prepolymer using conventional amounts of polyisocyanate

157.2 grams (0.902 mole) of approximately 80/20 2,4/2,6 toluene diisocyanate (TDI) was charged to a jacketed glass reactor equipped with a nitrogen blanket and overhead mechanical mixer. The TDI was agitated and heated to a temperature of about 80°C. 1044.6 g (0.447 mole) of polyethylene adipate with a hydroxyl value of about 48 mg KOH/g was heated to approximately 80°C and added to the reactor over a period of about 4 hours. The NCO to active hydrogen equivalent ratio was approximately 2:1. The reactor was maintained at about 80°C for an additional 16 hours to ensure completion of the reaction. The measured properties of the formed prepolymer are shown in Table 1. The calculated oligomer content of the prepolymer composition was 86 wt%.

**Table 1: Conventional Prepolymer Properties (Example 1)**

| | |
|---|---|
| NCO (wt%) | 2.44 |
| Residual TDI (wt%) | 1.38 |
| Viscosity at 50 °C (cP) | 16,400 |

### EXAMPLE 2

### Synthesis of a polyisocyanate prepolymer using a large stoichiometric excess of polyisocyanate

TDI and polyethylene adipate were reacted as in Example 1, except TDI was added in excess to produce an NCO to active hydrogen equivalent ratio of approximately 8:1. Unreacted TDI monomer was removed by wiped-film evaporation, yielding a prepolymer having the measured properties listed in Table 2. The calculated oligomer content was <5 wt%, and the prepolymer composition comprised >95 wt% of the desired "perfect" prepolymer.

**Table 2: Inventive Prepolymer Properties (Example 2)**

| | |
|---|---|
| NCO (wt%) | 3.18 |
| Residual TDI (wt%) | < 0.10 |
| Viscosity at 50 °C (cP) | 8,340 |

As shown in Tables 1 and 2, the prepolymer formed using a large stoichiometric excess of TDI (Example 2) has a viscosity approximately half of that of the prepolymer formed using conventional amounts of TDI (Example 1). Examples 3 and 4 describe the properties of radiation-curable polyurethane resins produced from the prepolymers of Examples 1 an 2.

### COMPARATIVE EXAMPLE 3

### Formation of a conventional radiation-curable polyurethane resin

505.55 g (0.294 NCO equivalents) of the prepolymer formed in Example 1 was heated to about 75°C in a jacketed glass reactor equipped with a nitrogen blanket and overhead mechanical mixer. 0.27 g of 4-methoxyphenol (MEHQ) was added to the prepolymer and mixed for about 15 minutes. 32.68 g (0.281 mole) of 2-hydroxyethyl acrylate (HEA) was then charged to the reactor, followed by 2.59 g of dibutylin dilaurate catalyst. An exotherm to about 85°C was observed. The reactor was held at about 70-80°C for an additional 90 minutes to ensure completion of the reaction. The viscosity of the resulting resin at 50°C was 58,300 cP.

### EXAMPLE 4

### Formation of inventive radiation-curable polyurethane resin

509.12 g (0.385 NCO equivalents) of the prepolymer formed in Example 2 was heated to about 60°C in a jacketed glass reactor equipped with a nitrogen blanket and overhead mechanical mixer. 0.28 g of MEHQ was added to the prepolymer and mixed for about 15 minutes. 42.58 g (0.367 mole) of HEA was then charged to the reactor, followed by 2.73 g of dibutylin dilaurate catalyst. An exotherm to about 80°C was observed. The reactor was held at about 70-80°C for an additional 90 minutes to ensure completion of the reaction. The viscosity of the resulting resin at 50°C was 23,550 cP.

A comparison of the resins of Examples 3 and 4 shows that the controlled-structure resin composition (Example 4) exhibits a viscosity lower than that of a conventional resin (Example 3) by a factor of about 2.5. The factor of 2.5 lower viscosity exhibited by the controlled-structure resin (Example 4) relative to the conventional resin (Example 3) is a surprising result given that the corresponding controlled-structure precursor prepolymer (Example 2) exhibits only a factor of 2.0 lower viscosity than the corresponding conventional resin (Example 1). Thus, radiation-curable polyurethane resin compositions of the present invention will require less reactive diluents to achieve acceptable processing viscosities as compared to conventional resin compositions.

Through use of the inventive process and selection of proper raw materials known to those of ordinary skill in the art it is possible to prepare resins that may require no reactive diluents.

Another benefit is the ability to prepare resins with higher functionality (i.e. >2) without problems of physical gelation during the preparation. Such novel resins would allow tailored/differentiated physical properties in the UV-cured polymer relative to small-molecule crosslinkers (e.g. diacrylates, triacrylates) commonly used today.

## Claims

1. A radiation-curable polyurethane resin composition comprising the contact product of
(a) at least one active hydrogen-containing compound having X active hydrogen atoms,
(b) at least one polyisocyanate having F isocyanate functionalities; and
(c) at least one radiation-curable small molecule having one active hydrogen atom;
wherein F and X are independently numbers ≥2; and
wherein at least about 80% of the resin composition comprises an adduct of X moles of polyisocyanate and (F-1)X moles of radiation-curable small molecule per mole of active hydrogen-containing compound.

2. The composition of Claim 1, wherein at least about 90% of the resin composition comprises an adduct of X moles of polyisocyanate and (F-1)X moles of radiation-curable small molecule per mole of active hydrogen-containing compound.

3. The composition of Claim 1, wherein X is 2.

4. The composition of Claim 1, wherein X is 3.

5. The composition of Claim 1 wherein the active hydrogen-containing compound is a polyol.

6. The composition of Claim 5 wherein the polyol is a polyether polyol, a polyester polyol, or a combination thereof.

7. The composition of Claim 6 wherein the polyol is a polyether polyol.

8. The composition of Claim 6 wherein the polyol is a polyester polyol.

9. The composition of Claim 1, wherein the polyisocyanate is a diisocyanate.

10. The composition of Claim 9, wherein the diisocyanate is 1,6-hexamethylene diisocyanate, m-phenylene diisocyanate, 2,4-toluene diisocyanate, 2,6-toluene diisocyanate, 4,4'-diphenylmethane diisocyanate, isophorone diisocyanate, 4,4'-methylene bis(cyclohexyl isocyanate) or any combination thereof.

11. The composition of Claim 9 wherein the diisocyanate is 2,4-toluene diisocyanate, 2,6-toluene diisocyanate, or a combination thereof.

12. The composition of Claim 1 wherein the radiation-curable small molecule is 2-hydroxyethyl acrylate; 2-hydroxyethyl methacrylate; 2-hydroxypropyl acrylate; 2-hydroxypropyl methacrylate; 2-hydroxybutyl acrylate; 2-hydroxybutyl methacrylate; N-hydroxymethyl acrylamide; N-hydroxymethyl methacrylamide; 1,4-butanediol monoacrylate; 1,4-butanediol monomethacrylate; 4-hydroxycyclohexyl acrylate; 4-hydroxycyclohexyl methacrylate; 1,6-hexanediol monoacrylate; 1,6-hexanediol monomethacrylate; neopentyl glycol monoacrylate; neopentyl glycol monomethacrylate; monoacrylates and monomethacrylates of ethylene glycol, diethylene glycol, triethylene glycol, propylene glycol, dipropylene glycol, and tripropylene glycol; or any combination thereof.

13. The composition of Claim 1, further comprising one or more pigments, one or more fillers, one or more flame retardants, one or more auxiliary thermoplastic components, one or more tackifiers, one or more plasticizers, one or more free radical inhibitors, one or more photoinitiators, one or more photostabilizers, one or more photosensitizers, one or more UV absorbers, one or more silane coupling agents, one or more leveling agents, one or more hydrolysis stabilizers, one or more reactive diluents or any combination thereof.

14. A process to produce a radiation-curable polyurethane resin composition comprising
(a) forming a prepolymer composition by contacting at least one polyisocyanate having F isocyanate (NCO) functionalities and at least one active hydrogen-containing compound having X active hydrogen atoms; wherein F and X are independently numbers ≥2; the prepolymer composition
(1) containing less than about 1 wt% unreacted polyisocyanate; and
(2) comprising at least about 80 wt% of a prepolymer of X moles of polyisocyanate per mole of active hydrogen-containing compound; and
(b) contacting the prepolymer composition with a sufficient amount of at least one radiation-curable small molecule having one active hydrogen atom to afford an adduct of X moles of polyisocyanate and (F-1)X moles of radiation-curable small molecule per mole of active hydrogen-containing compound.

15. A process to produce a radiation-curable polyurethane resin composition comprising
(a) forming a prepolymer composition by contacting at least one polyisocyanate having F isocyanate functionalities and at least one active hydrogen-containing compound having X active hydrogen atoms in an NCO to active hydrogen equivalent ratio of least about 4:1; wherein F and X are each independently a number ≥2;
(b) removing unreacted polyisocyanate from the prepolymer composition such that
(1) the amount of unreacted polyisocyanate in the prepolymer composition is less than about 1 wt% based on the total weight of the prepolymer composition; and
(2) at least about 80% of the prepolymer composition comprises a prepolymer of X moles of polyisocyanate per mole of active hydrogen-containing compound; and
(c) contacting the prepolymer with at least one radiation-curable small molecule having one active hydrogen atom.

16. The process of Claim 15 wherein the NCO to active hydrogen equivalent ratio in step (c) is about 1:1.

17. The process of Claim 15 wherein X is 2 or 3 and the active hydrogen-containing compound is a polyol.

18. The process of Claim 17 wherein the polyisocyanate is a diisocyanate.

19. The process of Claim 18 wherein the diisocyanate is 2,4-toluene diisocyanate, 2,6-toluene diisocyanate, or a combination thereof.

20. The process of Claim 18 wherein the radiation-curable small molecule is 2-hydroxyethyl acrylate; 2-hydroxyethyl methacrylate; 2-hydroxypropyl acrylate; 2-hydroxypropyl methacrylate; 2-hydroxybutyl acrylate; 2-hydroxybutyl methacrylate; N-hydroxymethyl acrylamide; N-hydroxymethyl methacrylamide; 1,4-butanediol monoacrylate; 1,4-butanediol monomethacrylate; 4-hydroxycyclohexyl acrylate; 4-hydroxycyclohexyl methacrylate; 1,6-hexanediol monoacrylate; 1,6-hexanediol monomethacrylate; neopentyl glycol monoacrylate; neopentyl glycol monomethacrylate; monoacrylates and monomethacrylates of ethylene glycol, diethylene glycol, triethylene glycol, propylene glycol, dipropylene glycol, and tripropylene glycol; or any combination thereof.

21. A process to produce a radiation-curable polyurethane resin composition comprising
(a) forming a prepolymer composition by contacting a di-isocyanate and at least one radiation-curable small molecule having one active hydrogen atom, the prepolymer composition
(1) containing less than about 1 wt% unreacted di-isocyanate; and
(2) comprising at least about 80 wt% of a prepolymer molecule of one mole of di-isocyanate per mole of radiation-curable small molecule; and
(b) contacting the prepolymer composition with at least one active hydrogen-containing compound having X active hydrogen atoms, wherein X is a number ≥2, in an NCO to active hydrogen equivalent ratio of approximately 1:1 to afford an adduct of X moles of di-isocyanate and X moles of radiation-curable small molecule per mole of active hydrogen-containing compound.

22. A process to produce a radiation-curable polyurethane resin composition comprising
(a) forming a prepolymer composition by contacting at least one di-isocyanate and at least one radiation-curable small molecule having one active hydrogen atom in an NCO to active hydrogen equivalent ratio of at least 4:1;
(b) removing unreacted polyisocyanate from the prepolymer composition such that the prepolymer composition
(1) contains less than about 1 wt% unreacted di-isocyanate; and
(2) comprises at least about 80% of a prepolymer molecule of one mole of di-isocyanate per mole of radiation-curable small molecule; and
(c) contacting the prepolymer composition with at least one active hydrogen-containing compound having X active hydrogen atoms, wherein X is a number greater than or equal to two.

23. The process of Claim 22, wherein the NCO to active hydrogen equivalent ratio in step (c) is about 1:1.

24. The process of Claim 23 wherein X is 2 or 3.
